# DEMANDE DE BREVET EUROPEEN

(11) **EP 1 900 588 A1**
(43) Date de publication de la demande: **19.03.2008**
(21) Numéro de dépôt: 07014567.7
(22) Date de dépôt: 25.07.2007
(51) Int. Cl.: B60W 30/18, B60W 40/04, B60W 40/06, B60W 40/08, G08G 1/09

(54) **Procédé de détermination de paramètres optimaux de conduite et système d'aide à l'eco-conduite correspondant**

(30) Priorité: 14.09.2006 FR 0608044
(71) Demandeur: Siemens VDO Automotive, 31036 Toulouse Cedex 1 (FR)
(72) Inventeur: Calvignac, Julien, 31000 Toulouse (FR); Sans, Mariano, 31700 Blagnac (FR); Boucharel, Paul, 31000 Toulouse (FR)

(57) **Abrégé**

Ce procédé compare une consommation instantanée optimale à une consommation instantanée réelle. La consommation optimale est calculée en fonction :
- des caractéristiques du véhicule,
- des conditions de circulation,
- de contraintes de temps prédéterminées.

Les caractéristiques du véhicule et les conditions de circulation permettent de déterminer un coût associé à une consommation de carburant en fonction de la vitesse du véhicule et les valeurs limite de vitesse admissible.

Les contraintes de temps permettent de déterminer un coût lié à une éventuelle augmentation de la durée du voyage,

La fonction de coût résultante est analysée pour déterminer des paramètres de conduite optimaux, et des indications sont données au conducteur pour qu'il puisse agir sur sa conduite afin d'atteindre la consommation optimale.

## Description

La présente invention concerne un procédé de détermination de paramètres optimaux de conduite ainsi qu'un système d'aide à l'éco-conduite correspondant.

Pour limiter la pollution ainsi que l'émission de gaz à effet de serre (CO₂), les moteurs modernes sont optimisés. Toutefois, de façon connue, selon le style de conduite adopté par le conducteur du véhicule, sa consommation de carburant, et donc également l'émission de CO₂, peuvent varier dans de larges proportions. Ainsi, par exemple, une conduite dite "sportive" peut amener une surconsommation de l'ordre de 25%, par rapport à une conduite dite "économe".

Pour aider le conducteur à limiter sa consommation, certains véhicules proposent de fournir au conducteur des indications sur sa consommation. Ainsi, dans certains véhicules, le conducteur peut connaître sa consommation instantanée et sa consommation moyenne. La consommation instantanée est calculée en fonction de la quantité de carburant instantanée consommée et de la vitesse actuelle du véhicule. Une consommation en litres par cent kilomètres (ou en litre par heure) en est alors déduite. La consommation moyenne est quant à elle calculée en fonction de la quantité de carburant consommée et de la distance parcourue depuis la dernière mise à zéro du système.

Vers 1980, certains véhicules présentaient un économètre ou éconoscope. A l'aide de diodes, par exemple de couleurs différentes (vert, orange et rouge), des indications sur la tendance de la consommation instantanée étaient données au conducteur. Sur d'autres modèles, des diodes sont intégrées au tachymètre. Elles s'allument en fonction de la vitesse et de la dépression au collecteur d'admission, inversement proportionnelle à la consommation de carburant. Les diodes s'allument en partant de la gauche : si elles s'allument à droite de l'aiguille du tachymètre, alors la consommation est considérée comme étant trop élevée.

Ainsi, les indicateurs de consommation connus donnent juste une information ponctuelle mais ne peuvent aider le conducteur à adapter de manière efficace son mode de conduite pour contrôler la consommation réelle de son véhicule durant un voyage donné ou sur une plus longue période.

Une autre solution a déjà été décrite dans le document EP1302356 dans le but de limiter un coût associé à une consommation de carburant par détermination de paramètres optimaux de conduite en relation avec une vitesse instantanée optimale du véhicule. Cette solution technique propose ainsi d'agir de manière indirecte sur la consommation en utilisant la variable vitesse du véhicule définie comme une variable d'ajustement.

Or s'il est bien connu que la consommation est reliée à la vitesse, elle ne dépend pas que de ce paramètre. En effet, la consommation est plutôt une fonction du régime moteur et de la charge. De ce fait, la consommation dépend des conditions de roulage du véhicule, à savoir : déplacement à plat, en montée, en descente (fonction de la pente), véhicule chargé ou non, ou niveau de la mer ou en altitude.

Ainsi, la solution technique décrite dans le document FORD ne permet pas d'optimiser au mieux le coût associé à une consommation de carburant.

La présente invention a alors pour but de fournir des moyens permettant au conducteur d'optimiser sa consommation de carburant.

A cet effet, elle propose un procédé d'aide à la conduite afin de permettre une limitation de la consommation de carburant selon lequel une consommation instantanée optimale est comparée à une consommation instantanée réelle, caractérisé en ce que la consommation optimale est calculée en fonction:
- des caractéristiques du véhicule,
- des conditions de circulation concernant notamment des informations de localisation permettant de connaître la vitesse maximale autorisée, la pente de la route (montée, descente, plat), la nature de la route, la densité du trafic
- de contraintes de temps prédéterminées,
   * en ce que les caractéristiques du véhicule permettent de déterminer un coût associé à une consommation de carburant en fonction de la vitesse du véhicule,
   * en ce que les conditions de circulation permettent de déterminer les valeurs limite de vitesse admissible,
   * en ce que les contraintes de temps permettent de déterminer un coût lié à une éventuelle augmentation de la durée du voyage,
   * en ce que la fonction de coût résultant de la consommation de carburant et des contraintes de temps est analysée pour déterminer des paramètres de conduite optimaux, et
   * en ce que des indications sont données au conducteur pour qu'il puisse agir sur sa conduite afin d'atteindre la consommation optimale.

De façon originale, la présente invention prend ici en compte des paramètres extérieurs pour calculer la consommation optimale et tient également compte de contraintes de temps. Les paramètres extérieurs sont donnés par exemple par un système de localisation de type GPS. Ils permettent de savoir où se trouve le véhicule et de connaître, grâce à une carte associée, la pente du terrain sur lequel il se trouve, la nature de la route et la vitesse maximale autorisée. Les contraintes de temps sont importantes également. Un conducteur, même lorsqu'il est en vacances, n'est pas prêt pour obtenir une consommation minimale à augmenter de manière inconsidérée la durée de son voyage. Ces contraintes permettent donc de proposer une réduction de la consommation sans trop allonger la durée du trajet.

Dans un procédé selon l'invention, les paramètres de conduite déterminés sont choisis parmi les paramètres suivants:
- vitesse du véhicule,
- rapport de boîte de vitesses engagé,
- définition du profil d'accélération ou de décélération, par action sur les pédales d'accélération et de frein,
- contrôle de charge concernant notamment les accessoires tels la climatisation, la radio, etc.

Ces paramètres sont les principaux paramètres qui permettent d'agir sur la consommation d'un véhicule. Les indications données peuvent concerner l'un de ces paramètres ou plusieurs d'entre eux.

Un procédé selon l'invention peut indiquer au conducteur des conditions optimales à un instant donné. Toutefois, en tenant compte du trajet à effectuer dans sa globalité, il est possible de mieux optimiser encore la consommation en tenant compte notamment des accélérations et décélérations à venir. Le procédé selon l'invention, dans une variante de réalisation propose alors que le conducteur indique sa destination, qu'un système de navigation calcule ensuite une trajectoire permettant d'arriver à destination, et que des conditions optimales sont déterminées pour l'ensemble de la trajectoire. Dans cette variante, les conditions de localisation comportent avantageusement des informations concernant également les conditions météorologiques prévues sur la trajectoire calculée et/ou les conditions de circulation concernant la fluidité du trafic.

La présente invention concerne aussi un dispositif d'aide à la conduite économique d'un véhicule automobile.

Un tel dispositif comporte :
- une interface permettant d'indiquer une contrainte de temps,
- des moyens électroniques permettant de calculer une consommation optimisée à partir de la contrainte de temps saisie, de caractéristiques propres au véhicule, d'informations reçues d'une part de capteurs et d'autre part de moyens de localisation associés à une mémoire permettant de déterminer une localisation précise du véhicule et des paramètres topographiques environnants,
- des moyens d'information donnant des indications de conduite pour permettre de tendre vers la consommation optimisée déterminée par les moyens électroniques de calcul.

Un tel dispositif peut être utilisé pour la mise en oeuvre du procédé décrit plus haut.

Dans un tel dispositif, les moyens d'information sont par exemple des moyens d'affichage intégrés au tableau de bord du véhicule. Selon une autre variante, les moyens d'informations comportent des moyens de transmission d'informations avec ou sans fil, les moyens d'information du dispositif sont des moyens d'affichage extérieurs au véhicule tels qu'un dispositif électronique, du type, téléphone mobile ou un assistant numérique personnel (PDA), et les indications de conduite sont transmises par les moyens de transmission avec ou sans fil au téléphone mobile.

Pour permettre d'apprécier sur un parcours les paramètres de conduite choisis, un dispositif selon l'invention comporte avantageusement des moyens de comparaison permettant de comparer les indications de conduite préconisées avec les paramètres de conduite adoptés par le conducteur, ainsi qu'une mémoire et des moyens de calcul permettant de déterminer à la fin d'un trajet dans quelle proportion les indications de conduite ont été respectées. Le système ainsi proposé permet de réaliser une formation du conducteur en lui permettant de voir s'il peut améliorer sa conduite et aussi éventuellement sur quels points il peut l'améliorer.

Le dispositif décrit ci-dessus calcule des indications pour la conduite d'un véhicule. Ces indications peuvent être aussi utilisées comme consigne pour la commande de systèmes automatiques du véhicule. L'invention propose ainsi que le dispositif d'aide à l'éco-conduite décrit plus haut comporte en outre des moyens de commande pour agir sur une boîte de vitesses automatique ou pilotée et/ou une interface avec un régulateur de vitesse automatique permettant de donner une vitesse de consigne au régulateur.

Des détails et avantages de la présente invention ressortiront mieux de la description qui suit, faite en référence aux dessins schématiques annexés sur lesquels :
La figure 1 représente un indicateur de consommation de carburant d'un dispositif selon l'invention,
La figure 2 montre une partie d'un tableau de bord avec des indicateurs d'un dispositif selon l'invention,
La figure 3 représente un téléphone mobile dont l'écran est utilisé pour donner les indications déterminées par un dispositif selon l'invention, et
La figure 4 montre des courbes de distribution de vitesse pour un trajet donné obtenues avec et sans le dispositif selon l'invention.

La présente invention propose un système d'aide à la conduite économique, ou éco-conduite, permettant notamment de limiter la consommation de carburant et l'émission de gaz à effet de serre, notamment de CO₂. Il est bien connu que le style de conduite d'un véhicule a une grande influence sur la consommation de celui-ci. Le système proposé ici a pour but d'aider un conducteur à gérer sa consommation de carburant.

L'invention propose tout d'abord une manière originale de déterminer une consommation optimale d'un véhicule. Divers paramètres permettant d'arriver à cette consommation optimale sont déterminés et des indications claires sont données au conducteur afin que celui-ci puisse adapter sa conduite et atteindre les valeurs optimales déterminées.

Le calcul d'une consommation optimale prend en compte trois types de paramètres : tout d'abord des paramètres propres au véhicule, ensuite des paramètres de conduite liés à l'environnement du véhicule et enfin des contraintes de temps liées au conducteur.

Les paramètres liés au véhicule permettent de calculer la consommation du véhicule. Pour chaque véhicule, on connaît la consommation spécifique du véhicule et la cartographie donnant la consommation du véhicule en fonction de la vitesse de celui-ci, de la charge du moteur corrigée par la température du moteur est connue. D'autres paramètres influençant sur la consommation peuvent également être pris en compte. Il s'agit par exemple du rapport de boîte engagé et du rendement mécanique correspondant. Pour les véhicules comportant un système permettant de couper le moteur et de le redémarrer automatiquement, il convient de prendre en compte également le couple et les frottements du démarreur électrique. Il s'agit ici donc des caractéristiques propres à la conception même du véhicule, notamment de son moteur, et qui influent sur la détermination de la consommation de ce véhicule. Les divers capteurs et le dispositif de gestion électronique du véhicule peuvent fournir toutes ces indications.

Il convient de prendre en compte également des paramètres extérieurs pour calculer une consommation du véhicule. En effet, la consommation est influencée par le fait que le véhicule est en pente, montante ou descendante, ou sur un terrain plat. Des conditions climatiques peuvent également rentrer en ligne de compte : température extérieure, taux d'humidité, etc.... Il convient également de connaître la nature de la route et la vitesse maximale autorisée à l'endroit auquel on se trouve. Celle-ci est différente selon que le véhicule se trouve en ville, sur une route ou sur autoroute. Toutes ces données peuvent être obtenues à l'aide d'un système GPS. Un tel système permet une localisation exacte du véhicule à quelques mètres près. A l'aide d'une carte mémorisée, il est alors possible, connaissant la position du véhicule fournie par le système GPS, de repérer l'endroit sur la carte où se trouve le véhicule. La carte indique alors le dénivelé de la route à cet endroit ainsi que la vitesse maximale autorisée.

Il est également possible d'intégrer ici des paramètres concernant les conditions météorologiques et les conditions de trafic réelles ou habituelles. Il existe en effet des systèmes permettant de communiquer avec l'extérieur pour connaître ces divers paramètres sur un parcours donné.

Comme autres paramètres extérieurs influençant la consommation de carburant, il convient également de citer les divers accessoires pouvant être utilisés à bord du véhicule. L'un des plus gros consommateur d'énergie, influençant donc le plus la consommation de carburant, est le climatiseur. D'autres accessoires, telle par exemple la radio ou d'autres accessoires électriques, sont à prendre en compte lorsqu'ils fonctionnent.

En prenant en compte tous ces paramètres, on arrive de manière connue à déterminer des conditions de conduite pour arriver à une consommation minimale de carburant. On peut ainsi déterminer la vitesse optimale, le rapport de boîte de vitesses à sélectionner, etc....

Toutefois, ces conditions optimales correspondent le plus souvent à une vitesse qui n'est pas forcément compatible avec l'environnement du véhicule. Ainsi par exemple une vitesse optimale pourrait être de l'ordre de 60km/h alors que le véhicule se trouve sur autoroute. De façon originale, la présente invention propose de prendre en compte des contraintes de temps.

L'invention propose alors de déterminer une fonction qui associe un coût à une durée ou à une augmentation de durée. Cette fonction exprime que le conducteur est près à payer plus cher, c'est-à-dire consommer plus, pour arriver plus rapidement. On peut ainsi déterminer un coût horaire. Ce coût horaire variera en fonction de certaines conditions. En effet, si le conducteur est en vacances son coût horaire sera plus faible que s'il est en déplacement professionnel. On peut ainsi déterminer plusieurs coûts horaires. Le conducteur peut par exemple choisir entre cinq cas de figures :
- conduite économique : ce choix correspond alors au taux horaire le plus bas,
- vacances,
- jours ouvrés : cette position correspond à un taux horaire moyen : elle correspond par exemple aux déplacements entre son domicile et son lieu de travail,
- déplacement professionnel,
- conduite sportive : ici le taux horaire est le plus élevé : le conducteur souhaite arriver le plus rapidement.

A l'aide de tout ou partie des paramètres évoqués ci-dessus, le système d'aide à la conduite peut déterminer des conditions de conduite optimale ainsi qu'une courbe de consommation en fonction de la vitesse.

Une autre courbe permet de déterminer un coût en fonction d'une durée d'un voyage. On peut par exemple extrapoler des valeurs ponctuelles à un voyage de 100 km dans les mêmes conditions que les conditions ponctuelles.

Pour additionner ces deux courbes, on peut donner par exemple un coût au litre de carburant dans une monnaie quelconque. On peut également exprimer le taux horaire du conducteur en litre de carburant.

En additionnant les deux fonctions, on obtient une courbe indiquant un coût, par exemple exprimé en litres de carburant ou dans une monnaie, en fonction de la vitesse du véhicule. La courbe obtenue présente un minimum. En effet, lorsque la vitesse est proche de 0 km/h, le temps du voyage tend vers l'infini et donc le coût associé également. De même lorsque la vitesse est trop élevée, le coût associé est très élevé. En outre, la vitesse est limitée. Il peut s'agir de la vitesse maximale autorisée localement ou bien encore de la vitesse maximale pouvant être atteinte par le véhicule. Généralement, sur l'intervalle allant de zéro à la vitesse maximale, la courbe présente un aspect en U avec une consommation minimale.

La courbe ainsi obtenue est donc analysée par le système afin de déterminer cette valeur minimale. On obtient ainsi la vitesse optimale du véhicule. A cette vitesse optimale correspondent des conditions de conduite optimale, concernant par exemple le rapport de boîte de vitesses engagé.

Le dispositif selon l'invention comporte ainsi des moyens de calcul permettant de déterminer des conditions de conduite optimale et des moyens permettant de donner des indications au conducteur pour lui permettre de réaliser ces conditions optimales.

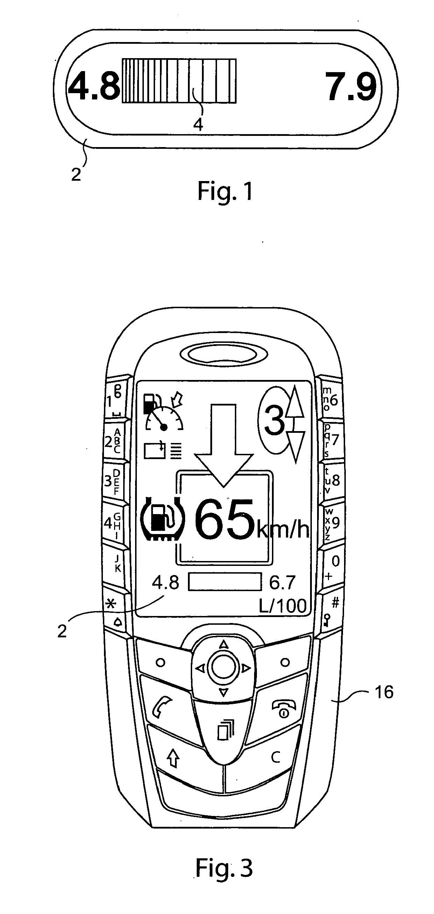

La figure 1 représente une jauge 2 de consommation. Sur la gauche de cette jauge, le dispositif affiche la consommation optimale dans les conditions actuelles (indication 4.8). Face à cette consommation optimale, à la droite de la jauge 2, est mentionnée la consommation actuelle du véhicule (indication 7.9). Un code barre linéaire 4, de couleur variable, informe immédiatement le conducteur sur son style de conduite.

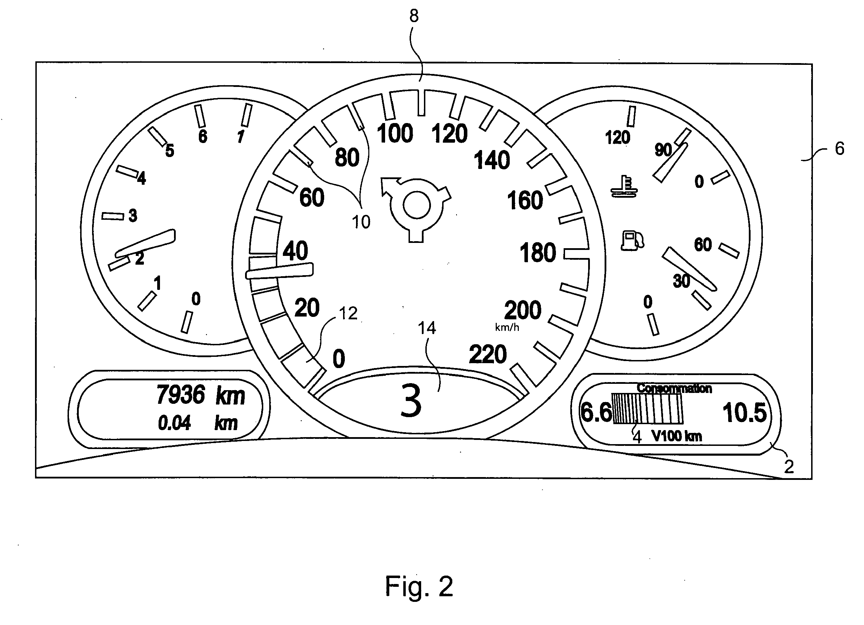

La figure 2 représente quant à elle une partie d'un tableau de bord 6 incluant la jauge 2 de la figure 1. Ici, une indication est fournie sur la vitesse optimale ainsi que sur le rapport de boîte idéal. La partie du tableau de bord 6 représenté comporte notamment un tachymètre 8. Il s'agit ici d'un tachymètre à aiguille. Il comporte des graduations 10 régulièrement réparties. Chaque graduation correspond à 10 km/h. Entre deux graduations successives 10 se trouve à chaque fois une diode. On remarque ainsi sur la figure 2 que cinq diodes 12, de 0 à 50 km/h sont allumées. Dans le cas présent, la vitesse optimale est donc de 50 km/h.

En bas, au centre du tachymètre 8, se trouve un petit écran 14 mentionnant le rapport de boîte de vitesses à sélectionner pour obtenir, dans les conditions actuelles, une consommation optimale. Dans le cas représenté sur la figure 2, il convient de choisir le troisième rapport. L'indication sur l'écran 14 est par exemple de couleur verte si le rapport engagé correspond au rapport optimal et de couleur rouge sinon.

La description faite plus haut concerne plus particulièrement une optimisation appelée ici optimisation locale. Le système prend en compte les données dont il dispose au moment où il réalise son calcul et n'a aucune indication sur le reste du trajet à parcourir. Ici, le calcul d'optimisation est réalisé à chaque fois que des paramètres changent : changement de déclivité, changement de la vitesse maximale autorisée, etc... On remarque que pour indiquer le rapport de boîte de vitesses optimale, une telle optimisation locale est suffisante.

L'invention propose également une optimisation appelée ici optimisation globale. Dans ce cas, le trajet du véhicule est déjà connu à l'avance. Le conducteur indique alors avant de partir sa destination. Un système de navigation calcule le trajet à emprunter. Le système connaît donc pour toute la trajectoire les différentes conditions extérieures qui vont être rencontrées, montées, descentes, route, ville, autoroute, durées.... Un calcul d'optimisation peut être réalisé pour tout le parcours. Si le véhicule est équipé d'un système télématique, il est même possible de prévoir un éventuel bouchon ou des conditions météorologiques dégradées. Ainsi par exemple si un bouchon est prévu il sera préférable de modérer la vitesse avant le bouchon pour limiter la consommation. De même, si des intempéries sont prévues les vitesses maximales autorisées peuvent varier et le système peut alors tenir compte de ces conditions particulières.

Le calcul d'optimisation est alors réalisé au début du trajet afin de découper ce trajet en plusieurs segments. Pour chacun de ces segments, des conditions de conduite optimales sont calculées. Durant le voyage, le système de navigation (GPS) permet de détecter chacun des segments prédéterminés. Les indications correspondantes sont alors fournies au conducteur. Un segment du trajet correspond à une portion de route sur laquelle les paramètres sont constants : même type de route, même limitation de vitesse, même dénivelé, .... Tout type d'algorithme d'optimisation peut être utilisé ici. Une solution préférée est d'utiliser un algorithme dynamique non linéaire régressif. Un calcul itératif est alors réalisé sur le critère choisi depuis le segment final, c'est-à-dire la destination, jusqu'au premier segment, c'est-à-dire le point de départ ou la position actuelle du véhicule.

Ce calcul global est particulièrement intéressant pour des véhicules hybrides c'est-à-dire des véhicules combinant un moteur thermique à un (ou plusieurs) moteur(s) électrique(s). En effet, si le système connaît par avance le trajet à réaliser, il peut prédire les décélérations qui permettront de recharger les batteries pour faire fonctionner les moteurs électriques et d'utiliser au mieux l'énergie électrique permettant alors de limiter sensiblement la consommation de carburant.

Comme indiqué plus haut, le système d'aide à l'éco-conduite peut donner des indications au conducteur, à l'aide de moyens d'affichage, pour lui permettre d'adapter sa conduite.

Le système peut aussi être utilisé pour la formation du conducteur. A la fin d'un parcours, le système peut afficher par exemple la consommation réelle et la comparer à la consommation optimale calculée. Il peut également donner des indications sur la consommation en ville, sur route, sur autoroute par rapport à la consommation optimale, indiquer si les rapports de boîte de vitesses ont bien été choisis, etc.. Lors d'un prochain voyage, le conducteur pourra alors essayer de mieux s'approcher de la consommation optimale en sachant sur quels points il doit être plus attentif.

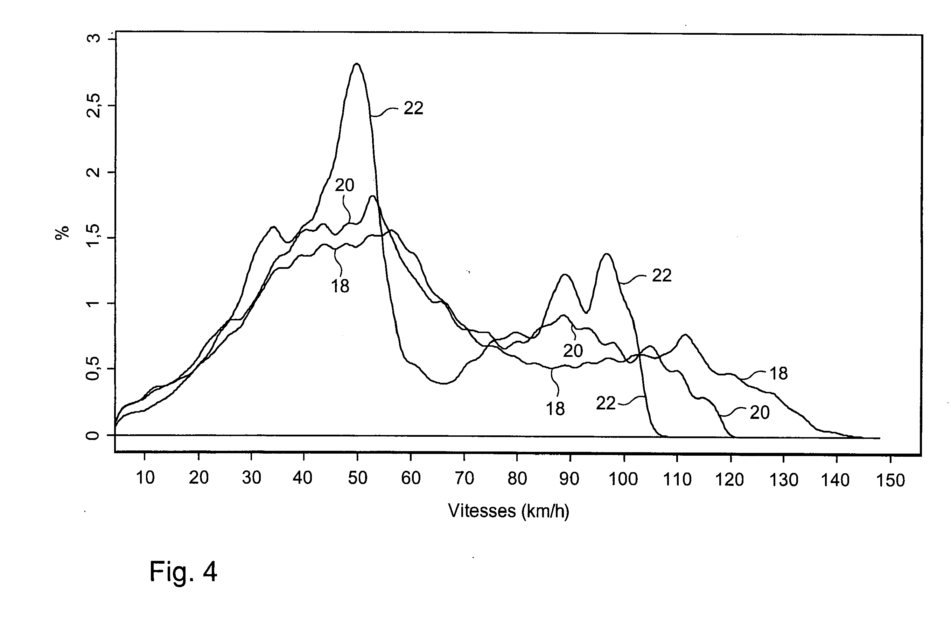

Les moyens d'affichage peuvent être intégrés au tableau de bord du véhicule comme suggéré plus haut. Ils peuvent aussi être extérieurs au véhicule. En effet, les indications du système d'aide à l'éco-conduite peuvent être transmis par des moyens de transmission avec ou sans fil à un téléphone mobile ou à un assistant personnel numérique. La figure 3 illustre l'affichage de données sur un téléphone mobile 16. On reconnaît sur l'écran de ce téléphone mobile 16 la présence d'une jauge 2 telle celle de la figure 1. Cet écran indique également au centre une vitesse de consigne optimale (65 km/h) et en haut à droite, le rapport de boîte à choisir pour une consommation optimale.

La présente invention prévoit également que le système d'aide à l'éco-conduite serve de moyen de commande pour des dispositifs de gestion de la conduite du véhicule.

Ainsi, dans un premier cas de figure, lorsque le véhicule est muni d'un dispositif de régulation de vitesse, la vitesse optimale calculée peut être communiquée au dispositif de régulation de vitesse qui régule alors la vitesse du véhicule sur la vitesse optimale fournie par le système d'aide à l'éco-conduite. On obtient ainsi le premier dispositif de régulation intelligent qui tient notamment compte du dénivelé de la route pour adapter la vitesse du véhicule.

Lorsque le véhicule est muni d'une boîte de vitesses automatique ou pilotée, le rapport de boîte déterminé par le système d'aide à l'éco-conduite peut aussi être transmis à la boîte de vitesses. On obtient alors un système de pilotage de la boîte de vitesses qui optimise la consommation du véhicule tout en tenant compte des contraintes de temps du conducteur.

Pour une meilleure gestion de la consommation, le système d'aide à l'éco-conduite peut aussi préconiser de diminuer la consommation électrique de certains accessoires ou limiter la puissance du climatiseur. Lorsque le surplus de consommation par rapport à une consommation optimale sans climatiseur, sans radio, et autres accessoires, est trop important, par exemple +20%, le système selon l'invention peut recommander de limiter la puissance de la climatisation ou de la radio ou autre. Il est ici possible de prévoir également que le système d'aide à l'éco-conduite commande des interrupteurs pour limiter la puissance consommée par la climatisation et d'autres accessoires.

Il est bien entendu possible de combiner une gestion manuelle de certains paramètres avec une gestion automatique d'autres. La vitesse du véhicule peut par exemple être contrôlée par le conducteur tandis que le changement de rapport de boîte de vitesses s'effectue automatiquement. D'autres combinaisons de gestion manuelle et automatique sont bien entendu envisageables.

La figure 4 illustre les résultats obtenus avec l'utilisation d'un système selon l'invention sur un ensemble significatif d'utilisateurs. Cette figure montre trois courbes de répartition de la vitesse sur un trajet donné.

Une première courbe 18 correspond à une conduite "classique", le conducteur ne bénéficiant pas d'assistance ni de formation à l'éco-conduite.

Une seconde courbe 20 correspond à une conduite de la même personne après qu'elle ait suivi une formation à l'éco-conduite, cette personne ne disposant pas du système d'aide selon l'invention.

Enfin, la troisième courbe 22 correspond à une conduite de la même personne lorsqu'elle dispose du système d'aide selon l'invention.

On remarque que la troisième courbe 22 privilégie les vitesses aux alentours de 50 km/h qui correspondent aux vitesses maximum autorisées en ville. On remarque également que la vitesse maximale est moins élevée.

On estime que sur un trajet mixte (route / ville) par rapport à la consommation d'un conducteur "moyen", une formation à l'éco-conduite permet de diminuer la consommation sur un même trajet d'environ 11% et que l'utilisation d'un système selon l'invention permet de diminuer la consommation de 17%. La consommation optimale est quant à elle de l'ordre de 20% inférieure à la consommation du conducteur "moyen".

Le système d'aide selon l'invention présente l'avantage de pouvoir être intégré dans un véhicule lors de sa conception mais il peut aussi venir équiper un véhicule déjà existant en utilisant par exemple des moyens d'affichage externes.

Plusieurs niveaux d'équipement sont possibles. Dans une version de base, le véhicule est équipé d'un système de localisation GPS. Le système d'aide à l'éco-conduite permet alors de donner des indications sur la vitesse optimale et le rapport de boîte à sélectionner pour une optimisation locale.

Lorsqu'un système de navigation est disponible, il est alors possible de prévoir une optimisation globale qui permet de mieux anticiper les phases d'accélération et de décélération et qui permet une meilleure optimisation grâce à la possibilité d'anticipation.

Lorsque des informations sur la météo et sur les conditions de circulation peuvent être obtenues, il est alors possible d'anticiper les bouchons et autres évènements liés au temps et à la circulation. En plus d'une meilleure optimisation de la consommation, ce niveau d'équipement permet aussi d'augmenter la sécurité de la conduite.

La présente invention ne se limite pas aux modes de réalisation décrits ci-dessus à titre d'exemples non limitatifs. Elle concerne également les variantes de réalisation à la portée de l'homme du métier dans le cadre des revendications ci-après.

Ainsi par exemple, au lieu de prévoir des moyens d'affichage donnant des indications visuelles, on ne sortirait pas du cadre de l'invention si les indications données par le système d'aide selon l'invention étaient sonores ou même éventuellement tactiles.

## Revendications

1. Procédé d'aide à la conduite afin de permettre une limitation de la consommation de carburant selon lequel une consommation instantanée optimale est comparée à une consommation instantanée réelle, **caractérisé en ce que** la consommation optimale est calculée en fonction:
- des caractéristiques du véhicule,
- des conditions de circulation,
- de contraintes de temps prédéterminées,
- **en ce que** les caractéristiques du véhicule permettent de déterminer un coût associé à une consommation de carburant en fonction de la vitesse du véhicule,
- **en ce que** les conditions de circulation permettent de déterminer les valeurs limite de vitesse admissible,
- **en ce que** les contraintes de temps permettent de déterminer un coût lié à une éventuelle augmentation de la durée du voyage,
- **en ce que** la fonction de coût résultant de la consommation de carburant et des contraintes de temps est analysée pour déterminer des paramètres de conduite optimaux, et
- **en ce que** des indications sont données au conducteur pour qu'il puisse agir sur sa conduite afin d'atteindre la consommation optimale.

2. Procédé selon la revendication 1, **caractérisé en ce que** les paramètres de conduite déterminés sont choisis parmi les paramètres suivants:
- vitesse du véhicule,
- rapport de boîte de vitesses engagé,
- profil d'accélération ou de décélération,
- contrôle de charge concernant notamment les accessoires tels la climatisation, la radio, etc.

3. Procédé selon l'une des revendications 1 ou 2, **caractérisé en ce que** le conducteur indique sa destination, **en ce qu'**un système de navigation calcule ensuite une trajectoire permettant d'arriver à destination, et **en ce que** des conditions optimales sont déterminées pour l'ensemble de la trajectoire.

4. Procédé selon la revendication 3, **caractérisé en ce que** les conditions de localisation comportent des informations concernant les conditions météorologiques prévues sur la trajectoire calculée et/ou les conditions de circulation concernant la fluidité du trafic.

5. Dispositif d'aide à la conduite économique d'un véhicule automobile, **caractérisé en ce qu'**il comporte :
- une interface permettant d'indiquer une contrainte de temps,
- des moyens électroniques permettant de calculer une consommation optimisée à partir de la contrainte de temps saisie, de caractéristiques propres au véhicule, d'informations reçues d'une part de capteurs et d'autre part de moyens de localisation associés à une mémoire permettant de déterminer une localisation précise du véhicule et des paramètres topographiques environnants,
- des moyens d'information donnant des indications de conduite pour permettre de tendre vers la consommation optimisée déterminée par les moyens électroniques de calcul.

6. Dispositif d'aide selon la revendication 5, **caractérisé en ce que** les moyens d'information sont des moyens d'affichage intégrés au tableau de bord du véhicule.

7. Dispositif d'aide selon la revendication 5, **caractérisé en ce qu'**il comporte des moyens de transmission d'informations sans fil, **en ce que** les moyens d'information du dispositif sont des moyens d'affichage extérieurs d'un dispositif électronique tel un téléphone mobile ou un assistant numérique personnel (PDA), et **en ce que** les indications de conduite sont transmises par les moyens de transmission avec ou sans fil au téléphone mobile.

8. Dispositif selon l'une des revendications 5 à 7, **caractérisé en ce qu'**il comporte des moyens de comparaison permettant de comparer les indications de conduite préconisées avec les paramètres de conduite adoptés par le conducteur, ainsi qu'une mémoire et des moyens de calcul permettant de déterminer à la fin d'un trajet dans quelle proportion les indications de conduite ont été respectées.

9. Dispositif selon l'une des revendications 5 à 8, **caractérisé en ce qu'**il comporte des moyens de commande pour agir sur une boîte de vitesses automatique ou pilotée.

10. Dispositif selon l'une des revendications 5 à 9, **caractérisé en ce qu'**il comporte une interface avec un régulateur de vitesse automatique permettant de donner une vitesse de consigne au régulateur.
